# EUROPÄISCHE PATENTSCHRIFT

(11) **EP 3 298 880 B1**
(45) Veröffentlichungstag und Bekanntmachung des Hinweises auf die Patenterteilung: **04.11.2020**
(21) Anmeldenummer: 17168174.5
(22) Anmeldetag: 26.04.2017
(51) Int. Cl.: A01F 12/40, A01D 41/12, A01D 41/127

(54) **MÄHDRESCHER MIT FAHRERASSISTENZSYSTEM**
COMBINE HARVESTER WITH DRIVER ASSISTANCE SYSTEM
MOISSONNEUSE-BATTEUSE DOTÉE D'UN SYSTÈME D'ASSISTANCE DU CONDUCTEUR

(30) Priorität: 27.09.2016 DE 102016118187
(43) Veröffentlichungstag der Anmeldung: 28.03.2018
(73) Patentinhaber: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Heitmann, Christoph, 48231 Warendorf (DE); Brinkmann, Jörn, 33428 Harsewinkel (DE); Vieregge, Christopher, 32694 Dörentrup (DE)
(74) Vertreter: CLAAS Gruppe

(56) Entgegenhaltungen:
- EP-A1- 2 712 754
- EP-A1- 3 000 303
- WO-A1-2014/118239

## Beschreibung

Die Erfindung betrifft einen Mähdrescher mit einem die Verteilung eines aus dem Mähdrescher austretenden Gutstranges auf dem Boden regelnden Fahrerassistenzsystem nach dem Oberbegriff des Anspruchs 1.

Häufig werden die von einem Mähdrescher während des Erntevorganges geernteten Nichtkornbestandteile, etwa zur Verbesserung der Bodenqualität, unmittelbar auf dem abgeernteten Territorium verteilt. Dabei ist wichtig, dass das verteilte Gut so beschaffen ist, dass es leicht verrottet, damit dessen Nährstoffanteile in der folgenden Vegetationsphase verfügbar sind. Eine optimale Verrottung wird dann erreicht, wenn das auf dem Boden verteilte Gut entsprechend kurzstückig ist und homogen über der Arbeitsbreite des Mähdreschers verteilt wird.

Aus dem Stand der Technik sind vielfältige Lösungen bekannt geworden, die diese Anforderungen erfüllen sollen. Beispielweise offenbart die EP 0 685 151 ein System, bei dem die Windverhältnisse im Bereich der Gutverteileinrichtung des Mähdreschers ermittelt werden und das Abgabeverhalten der Verteileinrichtung nach den Windverhältnissen geregelt wird. Ein solches System hat den Vorteil, dass eine seitenwindbedingte ungleichförmige Verteilung des aus dem Mähdrescher herausgeförderten Kurzstroh-Spreu-Gemisches vermieden, zumindest jedoch reduziert wird.

Aus der EP 1 790 207 ist ein System bekannt geworden, bei dem die Verteilung des im rückwärtigen Bereich aus dem Mähdrescher austretenden Gutstranges in Abhängigkeit von der Lage der Bestandskante geregelt wird. Ein derartiges System stellt sicher, dass der auf dem Boden zu verteilende Restmaterialanteil nicht in einen noch zu erntenden Bestand abgegeben wird, da dies den Nachteil hätte, dass bereits ausgedroschenes Gut ein weiteres Mal von einem Mähdrescher aufgenommen werden würde.

Schließlich sei beispielhaft noch auf die EP 1 514 466 verwiesen. Dort ist ein Mähdrescher mit Häcksel- und Verteileinrichtung offenbart, der in seinem rückwärtigen Bereich eine Infrarotkamera aufnimmt, die die Verteilgüte des auf dem Boden abgelegten Kurzstroh-Spreu-Gemisches anhand der detektierten Temperaturverteilung sensiert, wobei höhere Temperaturen ein Indikator für eine größere Schichthöhe sind. Basierend auf der ermittelten Temperaturänderung werden kinematische Parameter der Gutzerkleinerungs- und -verteileinrichtung in der Weise angepasst, dass sich eine annährend gleiche Temperaturverteilung über der Verteilbreite einstellt, was letztlich einen Indikator für eine homogene Gutverteilung bildet.

All den beschriebenen Systemen haftet der Nachteil an, dass sie in der Regel immer nur einen definierten Parameter zur Bestimmung der Verteilgüte auswerten. Komplexe Zusammenhänge zwischen verschiedensten, die Homogenität der Gutverteilung beeinflussenden Parametern können derartig System nicht erfassen.

Hier schlägt nun das in der DE 10 2014 113 965 (bzw. EP 3 000 303 A1) offenbarte Fahrerassistenzsystem vor, die Verteilung des Gutes auf dem Boden dadurch deutlich zu verbessern, dass in Abhängigkeit von detektierten Erntegut- und Umgebungsparametern verschiedene Verteilstrategien auswählbar sind, sodass sich stets eine optimierte Gutverteilung auf dem Boden einstellt. Es hat sich gezeigt, dass das Vorhalten verschiedener Verteilstrategien die Gutverteilung auf dem Boden deshalb deutlich verbessert, da wesentlich mehr Parameter bei der Ermittlung optimierte Verteilbedingungen berücksichtigt werden. Jedoch zeigte sich, dass selbst innerhalb spezieller Verteilstrategien derart intensive Abhängigkeiten zwischen Gut- und Maschinenparametern bestehen, dass auch die in DE 10 2014 113 965 offenbarten Verteilstrategien unter bestimmten Bedingungen an ihre Grenzen gelangen.

Es ist deshalb Aufgabe der Erfindung die beschriebenen Nachteile des Standes der Technik zu vermeiden und insbesondere ein Fahrerassistenzsystem vorzuschlagen, dass die die Gutverteilung auf dem Boden beeinflussenden komplexen Zusammenhänge zwischen verschiedensten Parametern besser erfasst und berücksichtigt.

Diese Aufgabe wird erfindungsgemäß durch die kennzeichnenden Merkmale des Anspruchs 1 gelöst.

Indem der Mähdrescher mit einem die Verteilung eines aus dem Mähdrescher austretenden Gutstranges auf dem Boden regelnden Fahrerassistenzsystem ausgestattet ist, welches über eine Recheneinheit und zumindest eine Anzeigeeinheit verfügt, wobei die Recheneinheit von maschineninternen Sensorsystemen generierte Informationen, externe Informationen und in der Recheneinheit hinterlegbare Informationen verarbeitet und der auf dem Boden zu verteilende Gutstrang im rückwärtigen Bereich des Mähdreschers eine Zerkleinerungs- und/oder Verteileinrichtung durchläuft und in dem Fahrerassistenzsystem zur Regelung der Verteilung des aus dem Mähdrescher austretenden Gutstranges auswählbare Verteilstrategien hinterlegt sind und bei Auswahl einer Verteilstrategie eine oder mehrere der jeweiligen Verteilstrategie zugeordnete Teilstrategien abgearbeitet werden, wird sichergestellt, dass die die Gutverteilung auf dem Boden beeinflussenden komplexen Zusammenhänge zwischen verschiedensten Parametern besser erfasst und berücksichtigt werden.

In einer vorteilhaften Ausgestaltung der Erfindung wird die Abarbeitung einer Verteilstrategie und/oder einer Teilstrategie oder einer Kombination aus mehreren Verteilstrategien und/oder mehreren Teilstrategien vom Fahrer des Mähdreschers ausgewählt oder vom Fahrerassistenzsystem vorgeschlagen. Dies hat insbesondere den Effekt, dass das Fahrerassistenzsystem sehr flexibel zur Optimierung der Verteilung des aus dem Mähdrescher austretenden Gutstrangs eingesetzt werden kann.

In einer weiteren vorteilhaften Ausgestaltung der Erfindung umfassen die auswählbaren Verteilstrategien zumindest eine oder mehrere der Verteilstrategien "gleichmäßige Gutverteilung", "Häckselqualität" und "Energieeffizienz", wobei die Verteilstrategie "gleichmäßige Gutverteilung" eine Optimierung der Verteilung des Gutstranges auf dem Boden, die Verteilstrategie "Häckselqualität" eine Optimierung der Zerkleinerung des Gutstranges in der Zerkleinerungseinrichtung und die Verteilstrategie "Energieeffizienz" eine Optimierung des Energiebedarfs für die Zerkleinerung und Verteilung des Gutstranges bewirkt. Auf diese Weise wird sichergestellt, dass neben der Optimierung der Verteilung des aus dem Mähdrescher austretenden Gutstranges auf dem Boden zugleich ein niedriger Energiebedarf und eine schnelle Verrottung des auf dem Boden verteilten Materials berücksichtigt werden.

Indem die Verteilstrategie "gleichmäßige Gutverteilung" eine oder mehrere Teilstrategien berücksichtigt wird sichergestellt, dass die Optimierung der Gutverteilung eine Vielzahl die Gutverteilung beeinflussende Parameter berücksichtigt, sodass das Fahrerassistenzsystem flexibel auf sich ändernde Bedingungen regiert. Wird in diesem Zusammenhang in einer Teilstrategie die aus der Verteileinrichtung austretende Masse des anteiligen Gutstranges und der Flächenanteil des Bodens auf dem der sensierte Anteil des Gutstranges verteilt wird gemessen und daraus die Gutverteilung auf dem Flächenanteil des Bodens bestimmt kann eine homogene Verteilung des Gutes auf dem tatsächlich abgeernteten Flächenstück besser eingehalten werden. Wird in einer weiteren Teilstrategie in Abhängigkeit von der Fahrgeschwindigkeit und der Teilbreitenauslastung des dem Mähdrescher zugeordneten Getreideschneidwerks der bearbeitete Flächenanteil ermittelt und die Verteilung des austretenden Gutstrangs auf diesen Flächenanteil des Bodens begrenzt verbessert dies ebenfalls die Begrenzung der Verteilung des aus dem Mähdrescher austretenden Gutstranges auf das tatsächlich abgeerntete Flächenstück. Ist in einer weiteren vorteilhaften Ausgestaltung die Teilstrategie darauf gerichtet, dass der Gutdurchsatz und seine Querverteilung im Mähdrescher ermittelt werden und wird eine Änderung der Austragrichtung und/oder - geschwindigkeit des Gutstranges aus der Verteileinrichtung in Abhängigkeit von dem ermittelten Durchsatz und der ermittelten Querverteilung vorgenommen können bei der Gutverteilung des austretenden Gutstranges negative Einflüsse einer nicht optimalen Gutstrangstruktur sehr gut kompensiert werden. Indem eine weitere Teilstrategie die Detektion der Fahrgeschwindigkeit im Verhältnis zur durchsatzabhängigen Fahrgeschwindigkeitsänderung berücksichtigt und eine Änderung der Austragrichtung und/oder -geschwindigkeit des Gutstranges in Abhängigkeit von der detektierten Fahrgeschwindigkeitsänderung bewirkt, wird sichergestellt, dass partielle Fahrgeschwindigkeitsänderungen die Verteilung des aus dem Mähdrescher austretenden Gutstranges auf dem Boden nicht negativ beeinflussen. Werden zudem in einer weiteren Teilstrategie die Windparameter Windstärke, Windgeschwindigkeit, Windrichtung detektiert und wird eine Änderung der Austragrichtung und/oder -geschwindigkeit des Gutstranges in Abhängigkeit von diesen detektierten Windparametern vorgenommen kann der negative Einfluss der äußeren Windverhältnisse auf die Gutverteilung auf dem Boden signifikant reduziert werden. In einer weiteren vorteilhaften Ausgestaltung kann eine weitere Teilstrategie die Hangneigung detektieren und die Austragrichtung und/oder -geschwindigkeit des Gutstranges in Abhängigkeit von der detektierten Hangneigung ändern, sodass die Gutverteilung hangaufwärts und hangabwärts so verändert wird, dass sich über die gesamte Verteilbreite eine optimalere Gutverteilung ergibt. Zur Kompensation der bekannten negativen Einflüsse der Strohfeuchte auf das Flugverhalten des aus dem Mähdrescher austretenden Gutstranges ist in einer weiteren vorteilhaften Ausgestaltung vorgesehen, dass eine weitere Teilstrategie darauf gerichtet ist, dass die Strohfeuchte detektiert wird und eine Änderung der Austragrichtung und/oder - geschwindigkeit des Gutstranges in Abhängigkeit von der detektierten Strohfeuchte erfolgt. Auf diese Weise kann das Flugverhalten sehr trockenen Gutes dadurch erhöht werden, dass die Teilchengröße erhöht wird, was zugleich auch den Energiebedarf verringert. Zudem kann bei sehr feuchtem Gut, die im Radialverteiler zuzuführende kinetische Energie reduziert werden, da feuchtes Gut deutlich weiter fliegt als trockenes. In diesem Zusammenhang ist es auch von Vorteil, wenn in einer weiteren vorteilhaften Ausgestaltung eine Teilstrategie vorgesehen ist, die die Verteilbreite der Verteileinrichtung bei abnehmendem Gutdurchsatz erhöht, da bei abnehmendem Durchsatz die zu verteilende Masse sinkt und der Widerstand der umgebenden Luft dem Verteileffekt entgegenwirkt.

Wegen des verbesserten Flugverhaltens sehr feuchten Gutes ist es zudem vorteilhaft, wenn die Verteilstrategie "gleichmäßige Gutverteilung" mit einer Teilstrategie gekoppelt ist, die mit zunehmender Strohfeuchte die Pendelfrequenz der Streubleche eines Radialverteilers erhöht.

Indem auch die Verteilstrategie "Häckselqualität" eine oder mehrere Teilstrategien berücksichtigt wird sichergestellt, dass die Optimierung des Verrottungsverhaltens des zu verteilenden Gutstranges eine Vielzahl den Verrottungseffekt beeinflussende Parameter berücksichtigt, sodass das Fahrerassistenzsystem flexibel auf sich ändernde Bedingungen regiert. In diesem Zusammenhang wird eine sehr effiziente Beeinflussung der Teilchengröße des aus dem Mähdrescher austretenden Gutstranges in einer vorteilhaften Ausgestaltung dann erreicht, wenn die verfügbaren Teilstrategien ein gestuftes Einschwenken der Gegenmesser und/oder das Einschwenken der Reibleiste umfassen.

In analoger Weise wird eine einen optimierten Energiebedarf aufweisende, eine gute Verrottung sicherstellende und eine optimale Gutverteilung gewährleistende Arbeitsweise der jeweiligen Gutverteileinrichtung dann erreicht, wenn auch die Verteilstrategie "Energieeffizienz" eine oder mehrere Teilstrategien berücksichtigt. Indem eine Teilstrategie bei verbesserter Verrottungsneigung oder verbesserten Flugeigenschaften des aus dem Mähdrescher austretenden Gutstranges eine Reduzierung des Energiebedarfs durch ein gestuftes Ausschwenken der Gegenmesser und/oder ein Ausschwenken der Reibleiste bewirkt, kann der Energiebedarf der Gutverteilung signifikant reduziert werden. In einer vorteilhaften Weiterbildung der Erfindung kann dieser Effekt auch dadurch noch gesteigert werden, wenn eine weitere Teilstrategie die Verrottungseignung des auf dem Boden zu verteilenden Gutstranges ermittelt und in Abhängigkeit von der ermittelten Verrottungseignung eine erforderliche Häcksellänge in der Zerkleinerungseinrichtung einstellt. Zu denselben Effekten kommt es auch dann, wenn in einer weiteren vorteilhaften Ausgestaltung eine Teilstrategie verfügbar ist, die die Häcksellänge in Abhängigkeit von der detektierten Gutfeuchte in der Weise ändert, dass mit abnehmender Gutfeuchte eine größere Häcksellänge eingestellt wird und/oder die Häcksellänge umso länger eingestellt wird, je besser die Verrottungseignung ist.

In einer weiteren vorteilhaften Ausgestaltung der Erfindung ist vorgesehen, dass bei indirekter Erfassung des Ergebnisses der Verteilstrategie "Energieeffizienz" ein oder mehrere der Einflussgrößen Drehzahl der Zerkleinerungseinrichtung, Drehzahl des Haupantriebes, Gutdurchsatz, Materialeigenschaften, Quer- und Längsverteilung im Häcksler, Reibleisten-, Gegenmesser- und Gegenschneidenparameter berücksichtigt werden.

Die komplexen Zusammenhänge der verschiedensten, die Verteilung des aus dem Mähdrescher austretenden Gutstranges auf dem Boden beeinflussenden Parameter werden in einer weiteren vorteilhaften Ausgestaltung dann hinreichend gut berücksichtigt, wenn eine oder mehrere der die Regelung der Verteilung des aus dem Mähdrescher austretenden Gutstranges bewirkenden Teilstrategien in Kennlinienfeldern in der Recheneinheit hinterlegt sind.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: die Seitenansicht einer als Mähdrescher ausgeführten landwirtschaftlichen Arbeitsmaschine
- Figur 2: eine Detailansicht nach Figur 1, einen Strohhäcksler mit Radialverteiler und ein Spreuwurfgebläse umfassend
- Figur 3: eine Detailansicht nach Figur 1, eine Auswurfhaube und einen Spreuverteiler umfassend
- Figur 4: eine schematische Ansicht des erfindungsgemäßen Fahrerassistenzsystems
- Figur 5: eine weitere schematische Ansicht des erfindungsgemäßen Fahrerassistenzsystems nach Figur 4
- Figur 6: einen schematisch dargestellten Anwendungsfall des erfindungsgemäßen Fahrerassistenzsystems

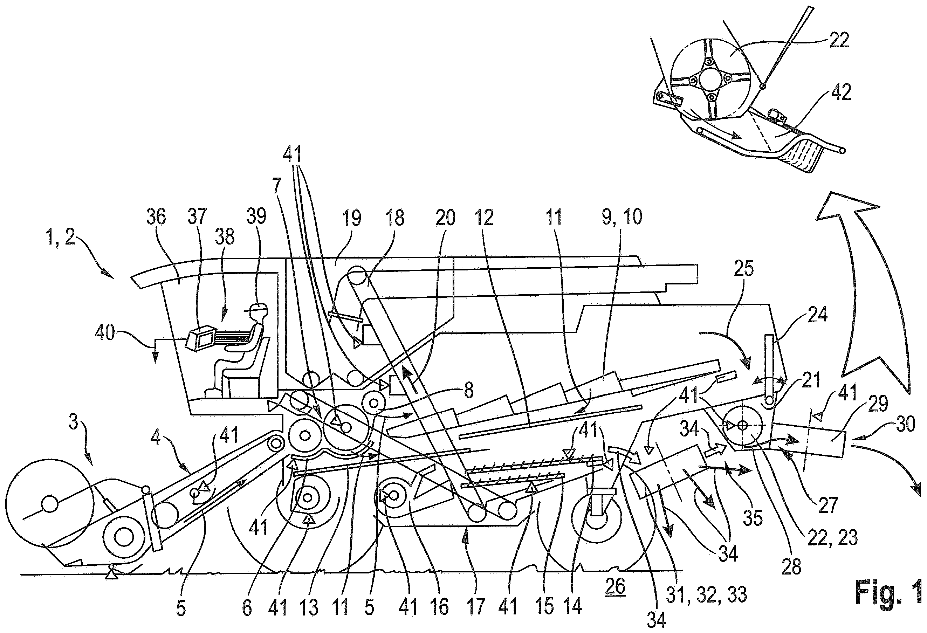

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Hordenschüttler 9 ausgeführte Trenneinrichtung 10 übergeben wird. Es liegt im Rahmen der Erfindung, dass die Trenneinrichtung 10 auch als an sich bekannter und deshalb nicht dargestellter Trennrotor ausgeführt sein kann. Auf dem rotierenden Hordenschüttler 9 wird der Gutstrom 5 so gefördert, dass in dem Gutstrom 5 enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom 20 wird schließlich mittels Elevatoren 18 an einen Korntank 19 übergeben.

Im rückwärtigen Bereich der als Hordenschüttler 9 ausgeführten Trenneinrichtung 10 ist dieser eine von einem trichterförmigen Gehäuse 21 ummantelte, als Strohhäcksler 22 ausgeführte, und im Folgenden noch näher zu beschreibende Zerkleinerungseinrichtung 23 zugeordnet. Dem Strohhäcksler 22 wird obenseitig das den Hordenschüttler 9 im rückwärtigen Bereich verlassende Stroh 25 zugeführt. Mittels einer verschwenkbaren Strohleitklappe 24 kann das den Hordenschüttler 9 verlassende Stroh 25 auch so umgelenkt werden, dass es direkt auf dem Boden 26 in einem Schwad abgelegt wird. Im Austrittsbereich 27 des Strohhäckslers 22 wird der aus dem zerkleinerten Stroh 25 bestehende Gutstrang 28 an einen sogenannten Radialverteiler 29 übergeben, der in noch näher zu beschreibender Weise in seinem Austrittsbereich 30 den Gutstrang 28 so abgibt, dass es zu einer Breitverteilung des Gutstranges 28 auf dem Boden 26 kommt.

Im dargestellten Ausführungsbeispiel ist der Reinigungseinrichtung 17 in ihrem rückwärtigen Bereich eine Spreufördereinrichtung 31 zugeordnet, die in noch näher zu beschreibender Weise entweder als Spreuwurfgebläse 32 oder Spreuverteiler 33 ausgebildet ist. Die aus der Reinigungseinrichtung 17 austretende Spreu 34 wird obenseitig der Spreufördereinrichtung 31 zugeführt. Wird das Stroh 25 zwecks Zerkleinerung an den Strohhäcksler 22 übergeben und mittels des Radialverteilers 29 auf dem Boden 26 verteilt, dann ist die Spreufördereinrichtung 31 als Spreuwurfgebläse 32 ausgeführt. In diesem Fall wird die von dem Spreuwurfgebläse 32 geförderte Spreu 34 in dessen rückwärtigen Bereich 35 unmittelbar an den Radialverteiler 29 übergeben, wobei dieser das zerkleinerte Stroh 25 und die Spreu 34 in einem einzigen Gutstrang 28 auf dem Boden 26 verteilt. Wird das Stroh 25 als Schwad auf dem Boden 26 abgelegt, sind Strohhäcksler 22 und Radialverteiler 29 außer Betrieb. In diesem Fall ist die Spreufördereinrichtung 31 als Spreuverteiler 33 ausgebildet, die in Analogie zum Radialverteiler 29 die Spreu 34 flächig auf dem Boden 26 verteilt. Die Spreufördereinrichtung 31 ist auch als Spreuverteiler 33 ausgeführt, wenn dem Strohhäcksler 22 anstelle des Radialverteilers 29 eine noch näher zu beschreibende Auswurfhaube 42 zur Verteilung des Gutstranges 28 auf dem Boden 26 zugeordnet ist.

Weiter verfügt die landwirtschaftliche Arbeitsmaschine 1 über eine Fahrzeugkabine 36 in der zumindest eine mit einer Anzeigeeinheit 37 versehene Steuer- und Regeleinrichtung 38 angeordnet ist, mittels derer automatisch oder vom Bediener 39 der landwirtschaftlichen Arbeitsmaschine 1 initiiert eine Vielzahl von noch näher zu beschreibenden Prozessen gesteuert werden können. Die Steuer- und Regeleinrichtung 38 kommuniziert über ein sogenanntes Bussystem 40 in an sich bekannter Weise mit einer Vielzahl von Sensorsystemen 41. Einzelheiten bezüglich der Struktur der Sensorsysteme 41 sind detailliert in der DE 101 47 733 beschrieben, sodass im Folgenden die Struktur der Sensorsysteme 41 nicht nochmals beschrieben wird.

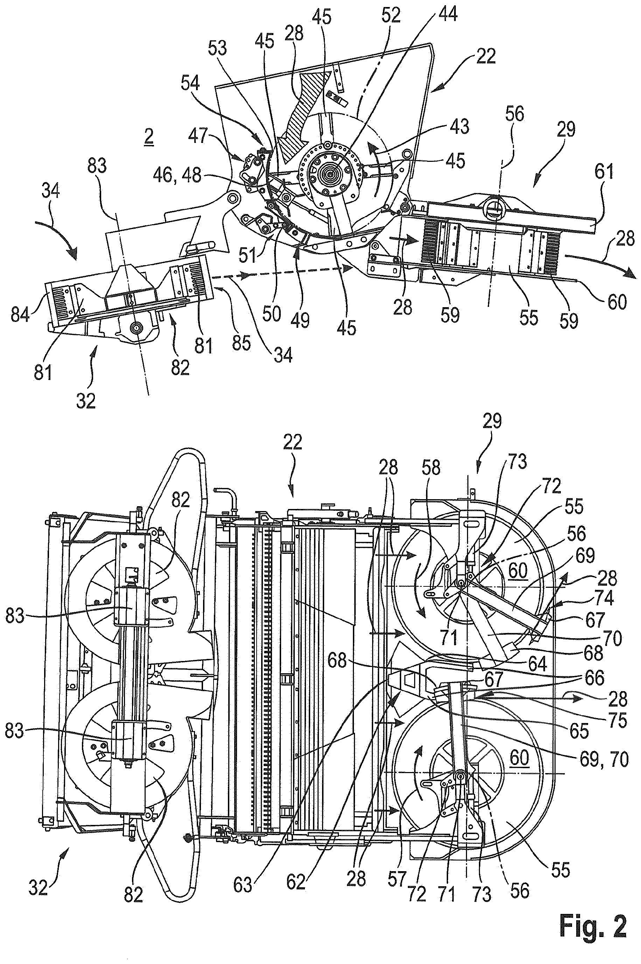

Figur 2 beschreibt konstruktive Details der Kombination Strohhäcksler 22 - Radialverteiler 29 in Seitenansicht und einer Ansicht von unten. Die in Pfeilrichtung 43 umlaufende Häckslerwelle 44 nimmt im dargestellten Ausführungsbeispiel vier über ihren Umfang verteilt angeordnete Reihen von freibeweglichen Häckselmessern 45 auf. Im rückwärtigen Bereich des Strohhäckslers 22 kämmen die Häckselmesser 45 mit zumindest einem im nicht näher beschriebenen Rahmen des Mähdreschers 2 gelagerten Messerkamm 46, wobei der Messerkamm 46 über Stellmittel 47 so geschwenkt werden kann, dass die von dem Messerkamm 46 aufgenommenen Gegenmesser 48 weiter in den Wirkbereich der Häckselmesser 45 hinein- oder aus diesem herausgeschwenkt werden können. Mittels der Änderung der Position des oder der Messerkämme 46 kann auf die sich einstellende Häcksellänge in der Weise Einfluss genommen werden, dass mit zunehmendem Eingriff der Gegenmesser 48 die Zerkleinerung des Gutstrangs 28 zunimmt. Zudem nimmt die die umlaufenden Häckselmesser 45 ummantelnde Häckslerwandung 49 eine an sich bekannte Reibleiste 50 auf, die mittels Stellmitteln 51 weiter an den Umfangskreis 52 der Häckselmesser 45 heran- oder von diesem wegbewegt werden kann. Die Reibleiste 50 hat die Funktion, die Geschwindigkeit des den Strohhäcksler 22 durchlaufenden Gutstrangs 28 abzubremsen, sodass sich die Verweilzeit des Gutstranges 28 im Strohhäcksler 22 und damit der Grad seiner Zerkleinerung erhöht. Zudem nimmt die Häckslerwandung 49 eine Gegenschneide 53 auf, die ebenfalls mittels geeigneter Stellmittel 54 weiter an den Umfangskreis 52 der Häckselmesser 45 heran- oder von diesem wegbewegt werden kann, wobei die Gegenschneide 53 den Effekt hat, dass sie die Aufspleißung der Partikel des Gutstranges 28 mit abnehmender Distanz zum Umfangskreis 52 der Häckselmesser 45 erhöht.

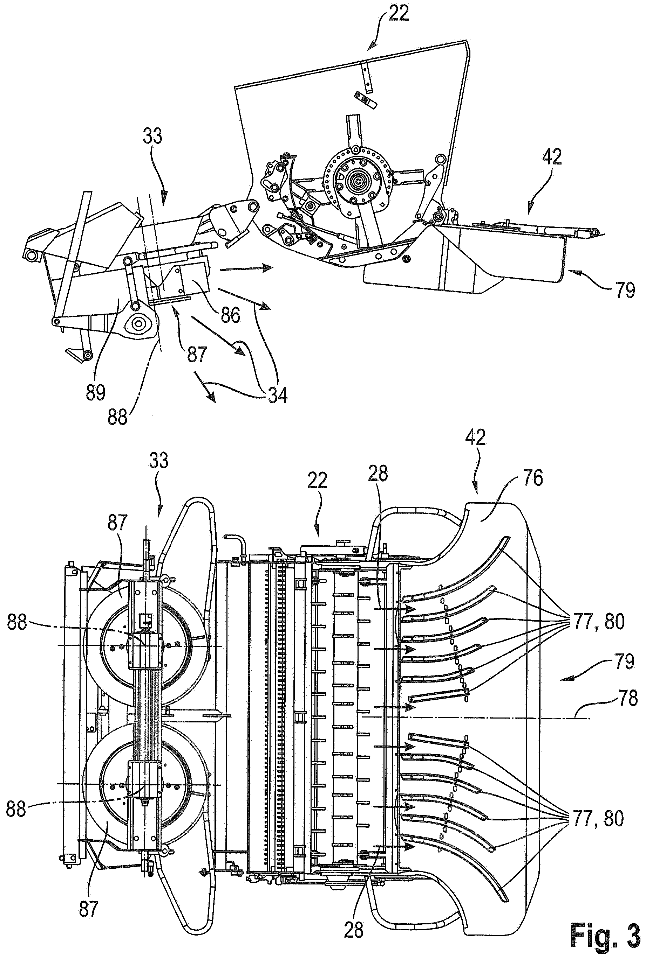

Der dem Strohhäcksler 22 nachgeordnete Radialverteiler 29 besteht aus zwei nebeneinander angeordneten Wurfgebläsen 55, die um vertikale Rotationsachsen 56 gemäß den Pfeilrichtungen 57, 58 zueinander gegenläufig umlaufen und den vom Strohhäcksler 22 zerkleinerten Gutstrang 28 aus dem Mähdrescher 2 austragen und in noch näher zu beschreibender Weise auf dem Boden 26 verteilen. Die Rotationsachsen 56 sind mit flexiblen Wurfschaufeln 59 besetzt, die nach unten von einer mitrotierenden Scheibe 60 abgedeckt sind und obenseitig von Abdeckblechen 61 verschlossen werden. Den beiden aus dem oberen Abdeckblechen 61, den Rotationsachsen 56, den Wurfschaufeln 59 und den mitrotierenden Scheiben 60 gebildeten Wurfgebläsen 55 ist ein Guttrennblech 62 zugeordnet, dessen Spitze 63 gegen den von dem Strohhäcksler 22 ausgestoßenen Gutstrang 28 gerichtet ist, sodass dieser auf die Wurfgebläse 55 verteilt wird. Die divergierenden Schenkel 64, 65 des Guttrennbleches 62 bilden zudem mit ihren auslaufenden Enden die feststehenden Teilummantelungen 66 für die Wurfgebläse 55. Zudem verfügt jedes Wurfgebläse 55 über erste und zweite bewegliche Wandungsteile, sogenannte Streubleche 67, 68, die über Winkelhebel 69, 70 um Drehachsen 71 umlaufend in der Weise angetrieben sind, dass das außenliegende Streublech 67 dem innenliegenden Streublech 68 vorausläuft. Die beweglichen Streubleche 67, 68 werden jeweils über mit einem Koppelmechanismus 72 in Wirkverbindung stehende Hubzylinder 73 in der Weise angetrieben, dass das vorauseilende Streublech 67 mit höherer Geschwindigkeit als das nachlaufende innenliegende Streublech 68 umläuft. Das vordere Ende der vorauslaufenden Streubleche 67 bildet die sogenannte Abrisskante 74, 75 über die der Gutstrang 28 aus dem jeweiligen Radialgebläse 55 austritt. Über die Bewegung der Winkelhebel 69, 70 wird die Drehbewegung der Abrisskanten 74, 75 so gesteuert, dass deren Schwenkgeschwindigkeit mit zunehmendem Abstand der Abrisskanten 74, 75 zu dem jeweils benachbarten Wurfgebläse 55 abnimmt. Dies hat den Effekt, dass die Abrisskanten 74, 75 in ihrem Überlappungsbereich kürzere und in den Außenbereichen längere Verweilzeiten aufweisen, sodass der an den Abrisskanten 74, 75 austretende Gutstrang 28 eine homogeneren Verteilung auf dem Boden 26 sicherstellt. Zudem kann der Schwenkbereich der Abrisskanten 74, 75 und damit die Verteilbreite des Radialverteilers 29 einstellbar sein. In dem dem Radialverteiler 29 abgewandten untenseitigen Bereich des Strohhäckslers 22 ist diesem das Spreuwurfgebläse 32 zugeordnet. Das Spreuwurfgebläse 32 nimmt in seinem Inneren ein mit Förderelementen 81 versehenes Wurfgebläse 82 auf, das um eine vertikale Achse 83 umlaufend angetrieben ist. Die Verkleidung 84 des Spreuwurfgebläses 32 ist so beschaffen, dass sie eine in Richtung des Radialverteilers 29 weisende Öffnung 85 aufweist über die die von der Reinigungseinrichtung 17 abgegebene Spreu 34 in den in den Radialverteiler 29 eintretenden Gutstrang 28 gefördert wird. Es liegt im Rahmen der Erfindung, dass das Spreuwurfgebläse 32 über zumindest paarweise angeordnete umlaufende Wurfgebläse 82 verfügt. Figur 3 beschreibt konstruktive Details der Kombination Strohhäcksler 22 - Strohauswurfhaube 42 in Seitenansicht und Ansicht von unten. Da der Strohhäcksler 22 dem nach Figur 2 entspricht werden hier nur Details der Strohauswurfhaube 42 und des Spreuverteilers 33 beschrieben. Im Wesentlichen wird die Strohauswurfhaube 42 von einer eine obenseitige und seitliche Begrenzung bildenden Verkleidungshaube 76 gebildet, der innenliegend eine Vielzahl von Gutleitschienen 77 zugeordnet sind. Die Gutleitschienen 77 haben in Bezug auf einen Mittenbereich 78 rechts- und linksseitige Ausrichtungen, sodass der in die Strohauswurfhaube 42 eintretende Gutstrang 28 rechts- oder linksgerichtet den Austrittsbereich 79 der Strohauswurfhaube 42 verlässt. Die Gutleitschienen 77 können entweder von ebenen oder in ihrer Krümmung änderbaren Stegblechen 80 gebildet werden. Zudem kann die Ausrichtung der Gutleitschienen 77 in der Verkleidungshaube 76 angepasst werden, sodass deren Querförderwirkung entweder erhöht oder reduziert wird. In dem der Strohausfallhaube 42 abgewandten untenseitigen Bereich des Strohhäckslers 22 ist diesem ein Spreuverteiler 33 zugeordnet. Der Spreuverteiler 33 nimmt in seinem Inneren ein mit Förderelementen 86 versehenes Wurfgebläse 87 auf, das um eine vertikale Achse 88 umlaufend angetrieben ist. Die Verkleidung 89 des Spreuverteilers 33 ist so beschaffen, dass die von der Reinigungseinrichtung 17 abgegebene Spreu 34 unmittelbar auf dem Boden 26 verteilt wird. Es liegt im Rahmen der Erfindung, dass der Spreuverteiler 33 über zumindest paarweise angeordnete umlaufende Wurfgebläse 87 verfügt.

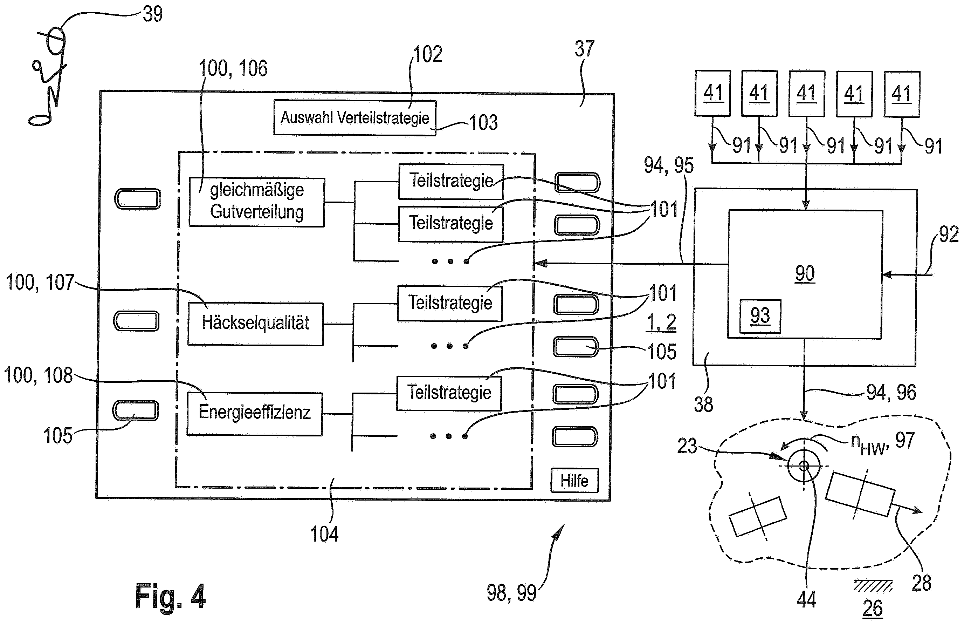

Fig. 4 zeigt eine schematische Darstellung der Anzeigeeinheit 37, der Steuer- und Regeleinrichtung 38 sowie eine der Steuer- und Regeleinrichtung 38 zugeordnete und mit der Anzeigeeinheit 37 gekoppelte Recheneinheit 90. Die Recheneinheit 90 ist so beschaffen, dass sie neben den von den Sensorsystemen 41 generierten Informationen 91, externe Informationen 92 und in der Recheneinheit 90 selbst hinterlegte Informationen 93, wie etwa Expertenwissen, zu einer Vielzahl von Ausgangssignalen 94 verarbeiten kann. Die Ausgangssignale 94 sind dabei so beschaffen, dass sie zumindest Anzeigesteuersignale 95 und Arbeitsorgansteuersignale 96 umfassen. Erstere bestimmen die Inhalte der Anzeigeeinheit 37 und letztere bewirken in erfindungsgemäßer Weise die Änderung der unterschiedlichsten Arbeitsorganparameter 97 der landwirtschaftlichen Arbeitsmaschine 1, wie beispielsweise die Drehzahl n_{HW} der Häckslerwelle 44, mit dem Ziel, eine homogene Verteilung des aus dem Mähdrescher 2 austretenden Gutstrangs 28 auf dem Boden 26 zu erreichen. Die Steuer- und Regeleinrichtung 38 mit der ihr zugeordneten Anzeigeeinheit 37 und der Recheneinheit 90 sind Bestandteil des erfindungsgemäßen Fahrerassistenzsystems 98. Das Fahrerassistenzsystem 98 ist als sogenannter Häcksel- und Verteilautomat 99 ausgeführt, der die Verteilung des Gutstranges 28 auf dem Boden 26 optimiert.

Erfindungsgemäß ist das Fahrerassistenzsystem 98 so ausgeführt, dass es zur Regelung der Verteilung des aus dem Mähdrescher 2 austretenden Gutstranges 28 auswähl- und editierbare Verteilstrategien 100 umfasst, wobei jeder Verteilstrategie 100 Teilstrategien 101 zugeordnet sind, sodass bei Auswahl einer Verteilstrategie 100 jeweils ein oder mehrere mit der gewählten Verteilstrategie 100 gekoppelte Teilstrategien 101 abgearbeitet werden. Es liegt zunächst im Rahmen der Erfindung, dass entweder der Bediener 39 oder das Fahrerassistenzsystem 98 eine abzuarbeitende Verteilstrategie 100 und/oder Teilstrategie 101 oder eine Kombination aus mehreren Verteilstrategien 100 und/oder mehreren Teilstrategien 101 auswählen. Ist in diesem Zusammenhang die Anzeigeeinheit 37 als Touchscreen ausgeführt, kann der Bediener 39 in einem besonders einfach gestalteten Fall die Auswahl einer geeigneten Strategie 100, 101 durch Berühren des jeweiligen Feldes auf dem Touchscreen bewirken. In einem ersten Menüschritt 102 kann durch Aktivierung eines Menüfeldes "Auswahl Strategie" 103 ein weiteres Menüfeld 104 geöffnet werden, in dem dann unmittelbar die Verteilstrategien 100 und die zugehörigen Teilstrategien 101 auswählbar sind. Es ist auch denkbar, dass die jeweiligen Strategien 100, 101 durch Betätigung von der Anzeigeeinheit 37 zugeordneten Tasten 105 ausgewählt werden.

Eine besonders effiziente Optimierung der Verteilung wird dann erreicht, wenn die auswählbaren Verteilstrategien 100 zumindest eine oder mehrere der Verteilstrategien "gleichmäßige Gutverteilung" 106, "Häckselqualität" 107 und "Energieeffizienz" 108 umfassen. Die Verteilstrategie "gleichmäßige Gutverteilung" 106 bewirkt dabei eine Optimierung der Verteilung des Gutstranges 28 auf dem Boden 26. Die Verteilstrategie "Häckselqualität" 107 führt zu einer Optimierung der Zerkleinerung des Gutstranges 28 in der Zerkleinerungseinrichtung 23, während die Verteilstrategie "Energieeffizienz" 108 eine Optimierung des Energiebedarfs für die Zerkleinerung und Verteilung des Gutstranges 28 bewirkt.

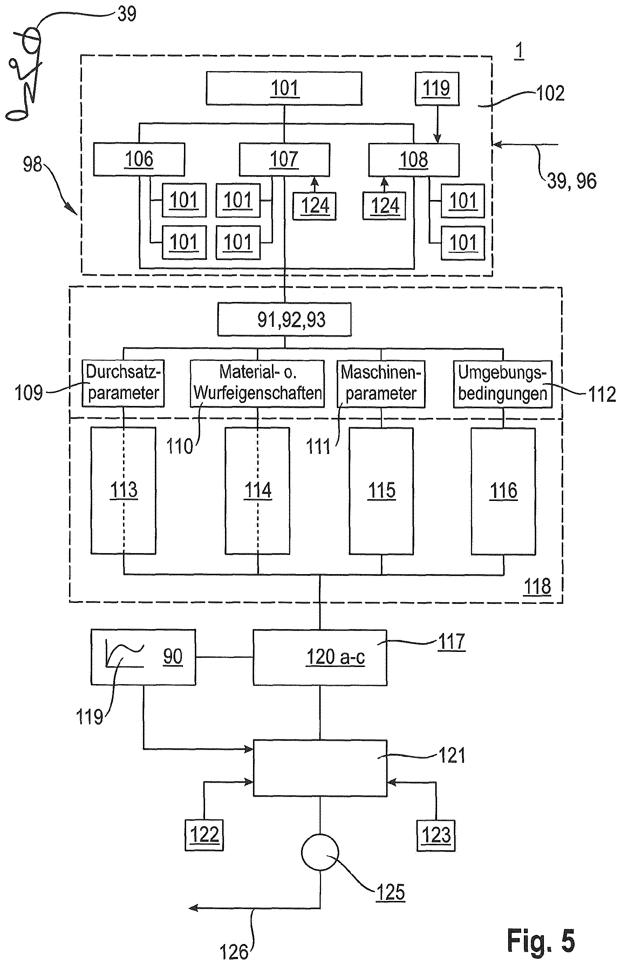

In Figur 5 sind Details der Verteilstrategien 100 und der erfindungsgemäßen Teilstrategien 101 schematisch beschrieben. In dem ersten Menüschritt 102 werden eine Verteilstrategie 106-108 und die ihr jeweils zugeordneten Teilstrategien 101 oder eine Kombination aus mehreren Verteil- und Teilstrategien 106-108, 101 vom Fahrer 39 des Mähdreschers 2 ausgewählt oder vom Fahrerassistenzsystem 98 vorgeschlagen. Jede der Verteilstrategien 106-108 und die noch näher zu erläuternden erfindungsgemäßen Teilstrategien 101 berücksichtigt eine Vielzahl der in dem Fahrerassistenzsystem 98 zugänglichen Informationen 91-93, wobei diese Informationen zumindest die Informationen "Durchsatzparameter" 109, "Material- oder Wurfeigenschaften" 110, "Maschinenparameter" 111 und "Umgebungsbedingungen" 112 umfassen.

Der durchsatzabhängige Einfluss auf die Verteilung des Gutstrangs 28 auf dem Boden 26 wird dann hinreichend gut erfasst, wenn die Information "Durchsatzparameter" 109 einen oder mehrere der durchsatzrelevanten Parameter 113 Korndurchsatz, Schichthöhe in einem dem Mähdrescher 2 zugeordneten Schrägförderer 4, Antriebsmotorauslastung, Antriebsleistungsbedarf der Zerkleinerungseinrichtung 23, Antriebsleistungsbedarf der Verteileinrichtungen Radialverteiler 29, Spreufördereinrichtung 31 und/oder Auswurfhaube 42 und/oder Quer- und Längsverteilung des Gutstrangs 28 in der Zerkleinerungseinrichtung 23 umfasst.

Der wurfeigenschaftsabhängige Einfluss auf die Gutverteilung auf dem Boden 26 wird dann gut erfasst, wenn die Information "Material- und Wurfeigenschaften" 110 einen oder mehrere der wurfeigenschaftsrelevanten Parameter 114 Strohfeuchte, Häcksellänge, Aufspleißung, Gutdichte, Zähigkeit und Fruchtart umfasst.

Der auf die Zerkleinerungseinrichtung 23 bezogene maschinenparameterabhängige Einfluss auf die Verteilung wird dann hinreichend gut erfasst, wenn die Zerkleinerungseinrichtung 23 als Strohhäcksler 22 ausgeführt ist und der Gutstrang 28 im Strohhäcksler 22 im Zusammenwirken von umlaufenden Häckselmessern 45 mit ortsfesten Gegenmessern 46, einer oder mehreren Gegenschneiden 53 und einer oder mehreren Reibleisten 50 zerkleinert wird und die Information "Maschinenparameter" 111 einen oder mehrere der maschinenrelevanten Parameter 115 Anzahl und Position der Reibleisten 50, der Gegenmesser 48, der Gegenschneiden 53 sowie Verschleißparameter der Häckselmesser 45 und Drehzahlparameter der Häckselwelle 44 umfasst.

Ist die Verteileinrichtung als Radialverteiler 29 ausgebildet, der zumindest auslenkbare Streubleche 67, 68 und ein oder mehrere Wurfgebläse 55 umfasst wird der maschinenparameterabhängige Einfluss auf die Verteilung des Gutstranges 28 auf dem Boden 26 dann hinreichend gut erfasst, wenn die Information "Maschinenparameter" 111 einen oder mehrere der maschinenrelevanten Parameter 115 Auslenkung, Pendelfrequenz und Verteilkurve der Streubleche 67, 68, Drehzahlparameter der Wurfgebläse 55 und vorgeschalteter umlaufender Arbeitsorgane des Mähdreschers 2 umfasst. Ist die Verteileinrichtung hingegen als Spreuwurfgebläse 32 oder Spreuverteiler 33 ausgebildet umfasst der maschinenrelevante Parameter 115 zumindest die Drehzahl der dem Spreuwurfgebläse 32 oder dem Spreuverteiler 33 zugeordneten Wurfgebläse 82, 87. Wird die den Gutstrang 28 auf dem Boden 26 verteilende Verteileinrichtung als mit Gutleitschienen 77 besetzte Auswurfhaube 42 ausgebildet umfasst der maschinenrelevante Parameter 115 zumindest die Ausrichtung der Gutleitschienen 77 in der Auswurfhaube 42.

Der umgebungsabhängige Einfluss auf die Verteilung des Gutstrangs 28 auf dem Boden 26 wird dann hinreichend gut erfasst, wenn die Information "Umgebungsbedingungen" 112 einen oder mehrere der umgebungsrelevanten Parameter 116 Luftfeuchte- und Lufttemperaturparameter, Windparameter wie Windgeschwindigkeit und Windrichtung sowie Hangneigungsparameter umfasst.

In erfindungsgemäßer Weise arbeitet das Fahrerassistenzsystem 98 in einem nächsten Menüschritt 117 die jeweilige Verteilstrategie 100 sowie die ihr zugeordnete zumindest eine Teilstrategie 101 unter Berücksichtigung der verfügbaren Informationen 118 und in der Recheneinheit 90 hinterlegter Kennlinien 119 ab, sodass sich schließlich eine Optimierung der Qualitätskriterien Gutverteilung 120a, Häckselqualität 120b und Energiebedarf 120c ergibt. In einem Ergebnismenüschritt 121 wird schließlich das durch die jeweilige Verteilstrategie 106-108 und dieser zugeordnete zumindest eine Teilstrategie 101 optimierte Qualitätskriterium 120a-c überprüft, wobei die Überprüfung direkt und indirekt erfolgt.

Bei Abarbeitung der Verteilstrategie "gleichmäßige Gutverteilung" 106 wird die direkte Überprüfung der Verteilung des aus dem Mähdrescher 2 austretenden Gutstranges 28 auf dem Boden 26 durch direkte Sensierung der Verteilung, etwa mittels an sich bekannter Kamera- oder Laserssysteme bewirkt. Die indirekte Erfassung erfolgt beispielsweise durch Abarbeitung der in der Recheneinheit 90 hinterlegten Kennlinienfelder 119.

In analoger Weise wird bei Abarbeitung der Verteilstrategie "Häckselqualität" 107 die direkte Erfassung des Ergebnisses durch Gutstromdetektion mittels an sich bekannter Gutanalysesensoren, wie etwa NIR-Sensoren, bewirkt. Die indirekte Erfassung erfolgt durch Abarbeitung eines in der Recheneinheit 90 hinterlegten Häckselqualitätsmodells 122, wobei das Häckselqualitätsmodell 122 beispielsweise die Häcksellänge in Abhängigkeit von detektierten Ernteguteigenschaften anpasst.

Bei Abarbeitung der Verteilstrategie "Energieeffizienz" 108 erfolgt die direkte Erfassung des Ergebnisses durch Drehmoment- und/oder Drehzahl- und/oder Motorauslastungsmessung. Die indirekte Erfassung erfolgt durch Abarbeitung eines in der Recheneinheit 90 hinterlegten Energieeffizienzmodells 123, wobei das Energieeffizienzmodell 123 in Analogie zum Häckselqualitätsmodell 122 den Antriebsenergiebedarf in Abhängigkeit von Ernteguteigenschaften variiert.

Die Optimierung der Qualitätsparameter Häckselqualität 120b und Energiebedarf 120c können auch dadurch noch verbessert werden, dass die in dem Fahrerassistenzsystem 98 hinterlegten Verteilstrategien "Häckselqualität" 107 und "Energieeffizienz" 108 sowie die ihnen zugeordneten erfindungsgemäßen Teilstrategien 101 miteinander kombiniert oder bilanziert werden. Hintergrund ist, dass die Qualitätsparameter Häckselqualität 120b und Energiebedarf 120c gegenläufige Tendenz aufweisen, da der Energiebedarf umso höher ist, je feiner der Gutstrang 28 eine schnelle Verrottung begünstigend zerkleinert wird. Eine vorteilhafte Weiterbildung der Erfindung ergibt sich in diesem Zusammenhang, wenn der Bediener 39 des Mähdreschers 2 Grenzwerte 124 für Häckselqualität 120b und Energiebedarf 120c festlegen und die Priorisierung einer der Verteilstrategien "Häckselqualität" 107 und "Energieeffizienz" 108 sowie zugehöriger Teilstrategien 101 oder eine Änderung der Gewichtung dieser Verteilstrategien 100 und der zugehörigen Teilstrategien 101 vornehmen kann.

In einem weiteren Menüschritt 125 bewirkt das Fahrerassistenzsystem 98 schließlich unter Berücksichtigung der Vorgaben des Bedieners 39 und den hinterlegten Kennlinien 119, 122, 123 eine Änderung von Maschinenparametern 111. Schließlich kann der Optimierungsvorgang nach Art einer Regelschleife 126 zyklisch wiederholt werden, wobei die zyklische Wiederholung entweder automatisch erfolgt oder vom Bediener 39 ausgelöst wird.

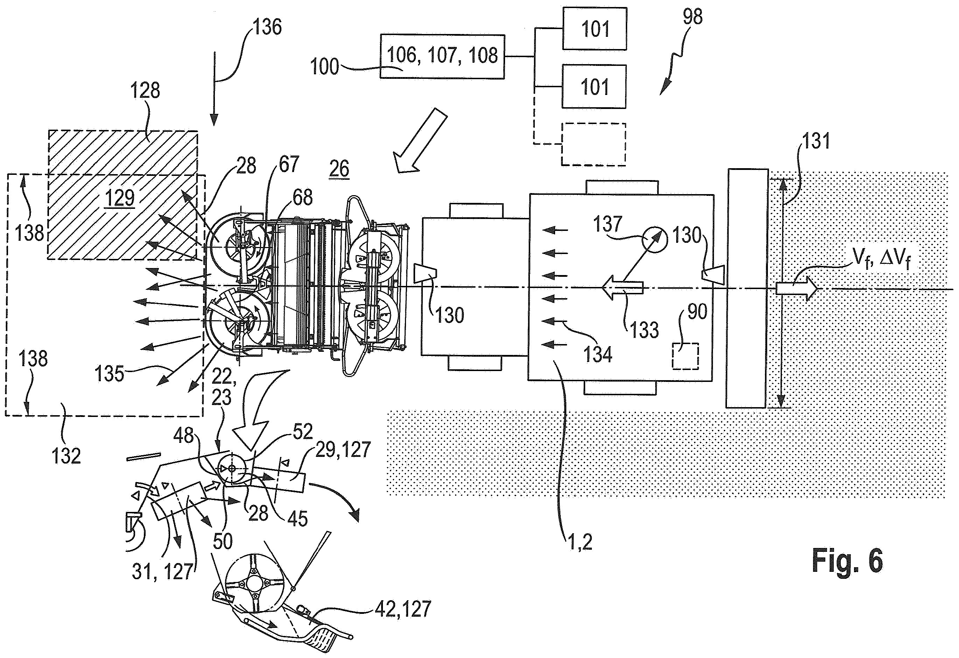

Figur 6 zeigt die in den erfindungsgemäßen Verteilstrategien 100 und den diesen jeweils zugeordneten Teilstrategien 101 hinterlegten Zusammenhänge beispielhaft an einem konkreten Anwendungsfall. Die erfindungsgemäße Verteilstrategie "gleichmäßige Gutverteilung" 106 ist so beschaffen, das sie eine Vielzahl von Teilstrategien 101 umfassen kann. In einer ersten Teilstrategie 101 wird die aus der als Spreufördereinrichtung 31, als Radialverteiler 29 oder Auswurfhaube 42 ausgeführte Verteileinrichtung 127 austretende Masse des anteiligen Gutstranges 28 und der Flächenanteil 128 des Bodens 26 auf dem der sensierte Anteil des Gutstranges 28 verteilt wird gemessen und daraus wird die Gutverteilung 129 auf dem Flächenanteil 128 des Bodens 26 ermittelt. In einem einfachen Anwendungsfall können die Menge des austretenden Gutstranges 28 und der zugehörige Flächenanteil 128 in an sich bekannter und daher nicht näher erläuterten Weise mittels geeigneter, an der landwirtschaftlichen Arbeitsmaschine 1 positionierter Kamerasysteme 130 detektiert werden.

In einer weiteren Teilstrategie 101 wird in Abhängigkeit von der Fahrgeschwindigkeit vf und der Teilbreitenauslastung 131 des dem Mähdrescher 2 zugeordneten Getreideschneidwerks 3 der bearbeitete Flächenanteil 132 ermittelt und die Verteilung des austretenden Gutstrangs 28 auf diesen Flächenanteil 132 des Bodens 26 begrenzt. Dies hat den Vorteil, dass der austretenden Gutstrang 28 nur dort verteilt wird wo auch geerntet wurde. Es liegt im Rahmen der Erfindung, dass der bearbeitete Flächenanteil 132 auf durch frontseitig am Mähdrescher 2 positionierte Kamerasysteme 130 ermittelt werden kann.

Eine Teilstrategie 101 kann auch so beschaffen sein, dass der Gutdurchsatz 133 und seine Querverteilung 134 mittels geeigneter und an sich bekannter Sensoren im Mähdrescher 2 ermittelt werden und die Austragrichtung und/oder -geschwindigkeit 135 des Gutstranges 28 aus der jeweiligen Verteileinrichtung 127 in Abhängigkeit von dem ermittelten Durchsatz 133 und der ermittelten Querverteilung 134 geregelt werden.

Eine weitere Teilstrategie 101 kann darauf gerichtet sein, dass die Fahrgeschwindigkeit vf im Verhältnis zur durchsatzabhängigen Fahrgeschwindigkeitsänderung Δvf ermittelt wird und die Austragrichtung und/oder - geschwindigkeit 135 des Gutstranges 28 in Abhängigkeit von der detektierten Fahrgeschwindigkeitsänderung Δvf geregelt werden. Dies ist dann von Vorteil, wenn ein sogenannter Fahrgeschwindigkeitsregler eingesetzt wird, der einen konstanten Gutdurchsatz 133 dadurch einstellt, dass er die Fahrgeschwindigkeit vf der landwirtschaftlichen Arbeitsmaschine 1 anpasst.

In einer weiteren Teilstrategie 101 werden zumindest die Windparameter 136 Windstärke, Windgeschwindigkeit, Windrichtung in an sich bekannter Weise sensiert und die Austragrichtung und/oder -geschwindigkeit 135 des Gutstranges 28 in Abhängigkeit von den detektierten Windparametern 136 angepasst.

In analoger und ebenfalls bekannter Weise kann in einer weiteren Teilstrategie 101 die Hangneigung ermittelt und die Austragrichtung und/oder -geschwindigkeit 135 des Gutstranges 28 in Abhängigkeit von der detektierten Hangneigung geregelt werden, wobei der hangaufwärts zu fördernde Gutanteil im Vergleich zum hangabwärts zu fördernden Gutanteil zunehmen muss.

Eine weitere Teilstrategie 101 kann so beschaffen sein, dass in Abhängigkeit von der ermittelten Strohfeuchte 137 eine Änderung der Austragrichtung und/oder - geschwindigkeit 135 des Gutstranges 28 bewirkt wird. Auf diese Weise werden die sich feuchteabhängig ändernden aerodynamischen Eigenschaften des austretenden Gutstranges 28 besser berücksichtigt. Beispielsweise steigt mit zunehmender Strohfeuchte 137 die Reibung zwischen dem Gutstrang 28 und den Leitelementen einer Auswurfhaube 42, sodass sich die Wurfweite des austretenden Gutstranges verringert während sich die Wurfweite bei Verteilung mittels Radialverteiler 29 mit zunehmender Gutfeuchte 137 erhöht. In beiden Fällen muss gegengesteuert werde, damit sichergestellt ist, das der austretende Gutstrang 28 gleichmäßig auf dem Boden 26 und insbesondere auf dem jeweiligen Flächenanteil 132 verteilt wird.

In analoger Weise kann in einer weiteren Teilstrategie 101 vorgesehen sein, dass bei abnehmendem Gutdurchsatz 133 die Verteilbreite 138 der jeweiligen Verteileinrichtung 127 erhöht wird. Dies hängt damit zusammen, dass ein leichterer Gutstrang 28 stärker durch den Luft- und Windwiderstand gebremst wird und damit weniger weit fliegt.

Eine besonders vorteilhafte Ausgestaltung der Erfindung ergibt sich dann, wenn die auf die Strohfeuchte 137 gerichtete Teilstrategie 101 mit zunehmender Strohfeuchte 137 die Pendelfrequenz der Streubleche 67, 68 erhöht.

Auch die erfindungsgemäße Verteilstrategie "Häckselqualität" 107 ist so beschaffen, das sie eine Vielzahl von Teilstrategien 101 umfassen kann. Beispielsweise können die der Verteilstrategie "Häckselqualität" 107 zugeordneten Teilstrategien 101 so beschaffen sein, dass sie ein gestuftes Einschwenken der Gegenmesser 48 und/oder das Einschwenken der Reibleiste 50 umfassen. Dabei nimmt der Zerkleinerungsgrad des Gutstranges 28 mit zunehmendem Eingriff der Gegenmesser 48 in den Umfangskreis 52 der Häckselmesser 45 zu. Der gleiche Effekt tritt ein, wenn die Reibleiste 50 näher an den Umfangskreis 52 der Häckselmesser 45 herangeführt wird. Ursache hierfür ist jedoch, das mit zunehmendem Eingriff der Reibleiste 50 in den Gutstrang 28 die Reibung zwischen Gutstrang 28 und Reibleiste 50 zunimmt und sich dadurch die Verweildauer des Gutsranges 28 im Strohhäcksler 22 erhöht.

Die erfindungsgemäße Verteilstrategie "Energieeffizienz" 108 ist in analoger Weise so beschaffen, das sie eine Vielzahl von Teilstrategien 101 umfassen kann. Eine signifikante Reduzierung des Energiebedarfs wird dann sichergestellt, wenn in einer ersten Teilstrategie 101 ein gestuftes Ausschwenken der Gegenmesser 48 und/oder ein Ausschwenken der Reibleiste 50 bewirkt werden. Indem entweder der Zerkleinerungseffekt oder die Reibung zwischen Gutstrang 28 und Reibleiste 50 reduziert werden sinkt der Energiebedarf.

Eine weitere Teilstrategie 101 kann in diesem Zusammenhang so beschaffen sein, dass die Verrottungseignung des auf dem Boden 26 zu verteilenden Gutstranges 28 ermittelt wird und in Abhängigkeit von der ermittelten Verrottungseignung eine erforderliche Häcksellänge in der Zerkleinerungseinrichtung 22 eingestellt wird, wobei dies im einfachsten Fall durch das Ein- oder Ausschwenken der Gegenmesser 48 und/oder der Reibleiste 50 bewirkt wird. In diesem Zusammenhang kann eine Teilstrategie 101 auch so beschaffen sein, dass die Häcksellänge umso länger eingestellt wird, je besser die Verrottungseignung ist.

Indem in einer weiteren Teilstrategie 101 die Häcksellänge in Abhängigkeit von der detektierten Strohfeuchte 137 in der Weise änderbar ist, dass mit abnehmender Strohfeuchte 137 eine größere Häcksellänge eingestellt wird, kann einerseits der negative Einfluss der abnehmenden Gutfeuchte auf die Wurfweite durch Erhöhung der Teilchengröße kompensiert werden und andererseits eine Reduzierung der notwendigen Zerkleinerungsenergie erreicht werden.

Bei indirekter Erfassung des Ergebnisses der Verteilstrategie "Energieeffizienz" 108 kann das erfindungsgemäße Fahrerassistenzsystem 98 zudem so beschaffen sein, dass es ein oder mehrere der Einflussgrößen Drehzahl der Zerkleinerungseinrichtung 23, Drehzahl des Haupantriebs der landwirtschaftlichen Arbeitsmaschien 1, den Gutdurchsatz 133, Materialeigenschaften des Gutstranges 28, Quer- und Längsverteilung im Strohhäcksler 22 sowie Reibleisten-, Gegenmesser- und Gegenschneidenparameter berücksichtigt werden.

Zudem liegt es im Rahmen der Erfindung, dass eine oder mehrere der die Regelung der Verteilung des aus dem Mähdrescher 2 austretenden Gutstranges 28 bewirkenden Teilstrategien 101 in Kennlinienfeldern 119 in der Recheneinheit 90 hinterlegt sind.

**Bezugszeichenliste:**

| | | | |
|---|---|---|---|
| 1 | landwirtschaftliche Arbeitsmaschine | 31 | Spreufördereinrichtung |
| 2 | Mähdrescher | 32 | Spreuwurfgebläse |
| 3 | Getreideschneidwerk | 33 | Spreuverteiler |
| 4 | Schrägförderer | 34 | Spreu |
| 5 | Erntegutstrom | 35 | rückwärtiger Bereich |
| 6 | Dreschkorb | 36 | Fahrzeugkabine |
| 7 | Dreschorgan | 37 | Anzeigeeinheit |
| 8 | Umlenktrommel | 38 | Steuer- und Regeleinrichtung |
| 9 | Hordenschüttler | 39 | Bediener |
| 10 | Trenneinrichtung | 40 | Bussystem |
| 11 | Körner | 41 | Sensorsystem |
| 12 | Rücklaufboden | 42 | Auswurfhaube |
| 13 | Zuführboden | 43 | Pfeilrichtung |
| 14 | Siebebene | 44 | Häckslerwelle |
| 15 | Siebebene | 45 | Häcksel messer |
| 16 | Gebläse | 46 | Messerkamm |
| 17 | Reinigungseinrichtung | 47 | Stellmittel |
| 18 | Elevator | 48 | Gegenmesser |
| 19 | Korntank | 49 | Häckslerwandung |
| 20 | Körnerstrom | 50 | Reibleiste |
| 21 | Gehäuse | 51 | Stellmittel |
| 22 | Strohhäcksler | 52 | Umfangskreis |
| 23 | Zerkleinerungseinrichtung | 53 | Gegenschneide |
| 24 | Strohleitklappe | 54 | Stellmittel |
| 25 | Stroh | 55 | Wurfgebläse |
| 26 | Boden | 56 | Rotationsachse |
| 27 | Austrittsbereich | 57,58 | Pfeilrichtung |
| 28 | Gutstrang | 59 | Wurfschaufel |
| 29 | Radialverteiler | 60 | Scheibe |
| 30 | Austrittsbereich | 61 | Abdeckblech |
| 62 | Guttrennblech | 96 | Arbeitsorgansteuersignale |
| 63 | Spitze | 97 | Arbeitsorganparameter |
| 64,65 | Schenkel | 98 | Fahrerassistenzsystem |
| 66 | Teilummantelung | 99 | Häcksel- und Verteilautomat |
| 67,68 | Streublech | 100 | Verteilstrategie |
| 69,70 | Winkelhebel | 101 | Teilstrategie |
| 71 | Drehachse | 102 | erster Menüschritt |
| 72 | Koppelmechanismus | 103 | Menuefeld |
| 73 | Hubzylinder | 104 | Menuefeld |
| 74,75 | Abrisskante | 105 | Taste |
| 76 | Verkleidungshaube | 106 | gleichmäßige Gutverteilung |
| 77 | Gutleitschiene | 107 | Häckselqualität |
| 78 | Mittenbereich | 108 | Energieeffizienz |
| 79 | Austrittsbereich | 109 | Durchsatzparameter |
| 80 | Stegblech | 110 | Material- oder Wurfeigenschaften |
| 81 | Förderelement | 111 | Maschinenparameter |
| 82 | Wurfgebläse | 112 | Umgebungsparameter |
| 83 | vertikale Achse | 113 | durchsatzrelevante Parameter |
| 84 | Verkleidung | 114 | wurfeigenschaftsrelevante Parameter |
| 85 | Öffnung | 115 | maschinenrelevante Parameter |
| 86 | Förderelement | 116 | umgebungsrelevanter Paramter |
| 87 | Wurfgebläse | 117 | weiterer Menüschritt |
| 88 | vertikale Achse | 118 | verfügbare Informationen |
| 89 | Verkleidung | 119 | Kennlinie |
| 90 | Recheneinheit | 120 | Qualitätskriterium |
| 91 | interne Informationen | 121 | Ergebnismenüschritt |
| 92 | externe Informationen | 122 | Häckselqualitätsmodell |
| 93 | Informationen | 123 | Energieeffizienzmodell |
| 94 | Ausgangssignale | 124 | Grenzwert |
| 95 | Anzeigesteuersignale | 125 | Menüschritt |
| 126 | Regelschleife | | |
| 127 | Verteileinrichtung | | |
| 128 | Flächenanteil | | |
| 129 | Gutverteilung | | |
| 130 | Kamerasystem | | |
| 131 | Teilbreitenauslastung | | |
| 132 | Flächenanteil | | |
| 133 | Gutdurchsatz | | |
| 134 | Querverteilung | | |
| 135 | Austragrichtung und - geschwindigkeit | | |
| 136 | Windparameter | | |
| 137 | Strohfeuchte | | |
| 138 | Verteilbreite | | |
| | | | |
| n_{HW} | Drehzahl Häckselwelle | | |
| vf | Fahrgeschwindigkeit | | |
| Δvf | Fahrgeschwindigkeitsänderung | | |

## Patentansprüche

1. Mähdrescher (2) mit einem die Verteilung eines aus dem Mähdrescher austretenden Gutstranges auf dem Boden regelnden Fahrerassistenzsystem (98), welches über eine Recheneinheit (90) und zumindest eine Anzeigeeinheit (37) verfügt, wobei die Recheneinheit (90) von maschineninternen Sensorsystemen (41) generierte Informationen (91), externe Informationen (92) und in der Recheneinheit (90) ninterlegbare Informationen (93) verarbeitet und der auf dem Boden (26) zu verteilende Gutstrang (28) rückwärtigen Bereich des Mähdreschers (2) eine Zerkleinerungs- und/oder Verteileinrichtung (23, 29, 42, 127) durchläuft, wobei in dem Fahrerassistenzsystem (98) zur Regelung der Verteilung des aus dem Mähdrescher (2) austretenden Gutstranges (28) auswählbare Verteilstrategien (100) hinterlegt sind **dadurch gekennzeichnet, dass** bei Auswahl einer Verteilstrategie (100) eine oder mehrere der jeweiligen Verteilstrategie (100) zugeordnete Teilstrategien (101) abgearbeitet werden.

2. Mähdrescher mit einem die Verteilung eines aus dem Mähdrescher austretenden Gutstranges auf dem Boden regelndes Fahrerassistenzsystem nach Anspruch 1;
**dadurch gekennzeichnet,**
**dass** eine Verteilstrategie (100) und/oder eine Teilstrategie (101) oder eine Kombination aus mehreren Verteilstrategien (100) und/oder mehreren Teilstrategien (101) vom Bediener (39) des Mähdreschers (2) ausgewählt oder vom Fahrerassistenzsystem (98) vorgeschlagen wird.

3. Mähdrescher mit einem die Verteilung eines aus dem Mähdrescher austretenden Gutstranges auf dem Boden regelndes Fahrerassistenzsystem nach Anspruch 1;
**dadurch gekennzeichnet,**
**dass** die auswählbaren Verteilstrategien (100) zumindest eine oder mehrere der Verteilstrategien "gleichmäßige Gutverteilung" (106), "Häckselqualität" (107) und "Energieeffizienz" (108) umfassen, wobei die Verteilstrategie "gleichmäßige Gutverteilung" (106) eine Optimierung der Verteilung des Gutstranges (28) auf dem Boden (26), die Verteilstrategie "Häckselqualität" (107) eine Optimierung der Zerkleinerung des Gutstranges (28) in der Zerkleinerungseinrichtung (23) und die Verteilstrategie "Energieeffizienz" (108) eine Optimierung des Energiebedarfs für die Zerkleinerung und Verteilung des Gutstranges (28) bewirkt.

4. Mähdrescher mit einem die Verteilung eines aus dem Mähdrescher austretenden Gutstranges auf dem Boden regelndes Fahrerassistenzsystem nach Anspruch 3;
**dadurch gekennzeichnet,**
**dass** die Verteilstrategie "gleichmäßige Gutverteilung" (106) eine oder mehrere der folgenden Teilstrategien (101) berücksichtigt:
a) die aus der Verteileinrichtung (127) austretende Masse des anteiligen Gutstranges (28) und der Flächenanteil (128) des Bodens (26) auf dem der sensierte Anteil des Gutstranges (28) verteilt wird werden gemessen und daraus wird die Gutverteilung auf dem Flächenanteil (128) des Bodens (26) bestimmt;
b) in Abhängigkeit von der Fahrgeschwindigkeit (vf) und der Teilbreitenauslastung (131) des dem Mähdrescher (2) zugeordneten Getreideschneidwerks (3) wird der bearbeitete Flächenanteil (132) ermittelt und die Verteilung des austretenden Gutstrangs (28) auf diesen Flächenanteil (132) des Bodens (26) begrenzt;
c) Ermittlung des Gutdurchsatzes (133) und seine Querverteilung (134) im Mähdrescher (2) und Änderung der Austragrichtung und/oder -geschwindigkeit (135) des Gutstranges (28) aus der Verteileinrichtung (127) in Abhängigkeit von dem ermittelten Durchsatz (133) und der ermittelten Querverteilung (134);
d) Detektion der Fahrgeschwindigkeit (vf) im Verhältnis zur durchsatzabhängigen Fahrgeschwindigkeitsänderung (Δvf) und Änderung der Austragrichtung und/oder -geschwindigkeit (135) des Gutstranges (28) in Abhängigkeit von der detektierten Fahrgeschwindigkeitsänderung (Δvf);
e) Detektion der Windparameter (136) Windstärke, Windgeschwindigkeit, Windrichtung und Änderung der Austragrichtung und/oder -geschwindigkeit (135) des Gutstranges (28) in Abhängigkeit von den detektierten Windparametern (136);
f) Detektion der Hangneigung und Änderung der Austragrichtung und/oder - geschwindigkeit (135) des Gutstranges (28) in Abhängigkeit von der detektierten Hangneigung;
g) Detektion der Strohfeuchte (137) und Änderung der Austragrichtung und/oder -geschwindigkeit (135) des Gutstranges (28) in Abhängigkeit von der detektierten Strohfeuchte (137);
h) Vergrößerung der Verteilbreite (138) der Verteileinrichtung (127) bei abnehmendem Gutdurchsatz (133).

5. Mähdrescher mit einem die Verteilung eines aus dem Mähdrescher austretenden Gutstranges auf dem Boden regelndes Fahrerassistenzsystem nach Anspruch 4;
**dadurch gekennzeichnet,**
**dass** die Verteileinrichtung (127) als Streubleche (67, 68) aufweisender Radialverteiler (29) ausgeführt ist und die Teilstrategie g) mit zunehmender Strohfeuchte (137) die Pendelfrequenz der Streubleche (67, 68) erhöht.

6. Mähdrescher mit einem die Verteilung eines aus dem Mähdrescher austretenden Gutstranges auf dem Boden regelndes Fahrerassistenzsystem nach Anspruch 3;
**dadurch gekennzeichnet,**
**dass** die Verteilstrategie "Häckselqualität" (107) zumindest die Teilstrategien (101) gestuftes Einschwenken der Gegenmesser (48) und/oder das Einschwenken der Reibleiste (50) umfasst.

7. Mähdrescher mit einem die Verteilung eines aus dem Mähdrescher austretenden Gutstranges auf dem Boden regelndes Fahrerassistenzsystem nach Anspruch 3;
**dadurch gekennzeichnet,**
**dass** die Verteilstrategie "Energieeffizienz" (108) eine oder mehrere der folgenden Teilstrategien (101) berücksichtigt:
a) ein Reduzierung des Energiebedarfs durch ein gestuftes Ausschwenken der Gegenmesser (48) und/oder ein Ausschwenken der Reibleiste (50) bewirkt wird;
b) die Verrottungseignung des auf dem Boden (26) zu verteilenden Gutstranges (28) ermittelt wird und in Abhängigkeit von der ermittelten Verrottungseignung eine erforderliche Häcksellänge in der Zerkleinerungseinrichtung (23) eingestellt wird;
c) die Häcksellänge in Abhängigkeit von der detektierten Strohfeuchte (137) in der Weise geändert wird, dass mit abnehmender Strohfeuchte (137) eine größere Häcksellänge eingestellt wird ;
d) die Häcksellänge umso länger eingestellt wird, je besser die Verrottungseignung ist.

8. Mähdrescher mit einem die Verteilung eines aus dem Mähdrescher austretenden Gutstranges auf dem Boden regelndes Fahrerassistenzsystem nach Anspruch 3;
**dadurch gekennzeichnet,**
**dass** bei indirekter Erfassung des Ergebnisses der Verteilstrategie "Energieeffizienz" (108) ein oder mehrere der Einflussgrößen Drehzahl der Zerkleinerungseinrichtung (23), Drehzahl Haupantrieb, Gutdurchsatz, Materialeigenschaften, Quer- und Längsverteilung im Strohhäcksler (22), Reibleisten-(50), Gegenmesser-(48) und Gegenschneidenparameter (53) berücksichtigt werden.

9. Mähdrescher mit einem die Verteilung eines aus dem Mähdrescher austretenden Gutstranges auf dem Boden regelndes Fahrerassistenzsystem nach einem der vorhergehenden Ansprüche;
**dadurch gekennzeichnet,**
**dass** eine oder mehrere der die Regelung der Verteilung des aus dem Mähdrescher (2) austretenden Gutstranges (28) bewirkenden Teilstrategien (101) in Kennlinienfeldern (119) in der Recheneinheit (90) hinterlegt sind.

## Claims

1. A combine harvester comprising a driver assist system (98) which controls the distribution of a crop flow issuing from the combine harvester on the ground and which has a computing unit (90) and at least one display unit (37), wherein the computing unit (90) processes information (91) generated by machine-internal sensor systems (41), external information (92) and information which can be stored in the computing unit (90) and the crop flow (28) to be distributed on the ground (26) in the rearward region of the combine harvester (2) passes through a chopping device and/or distribution device (23, 29, 42, 127), wherein selectable distribution strategies (100) are stored in the driver assist system (98) for controlling the distribution of the crop flow (28) issuing from the combine harvester (2), **characterised in that** upon selection of a distribution strategy (100) one or more partial strategies (101) associated with the respective distribution strategy (100) are processed.

2. A combine harvester comprising a driver assist system controlling the distribution of a crop flow issuing from the combine harvester on the ground according to claim 1:
**characterised in that** a distribution strategy (100) and/or a partial strategy (101) or a combination comprising a plurality of distribution strategies (100) and/or a plurality of partial strategies (101) is selected by the operator (39) of the combine harvester (2) or proposed by the driver assist system (98).

3. A combine harvester comprising a driver assist system controlling the distribution of a crop flow issuing from the combine harvester on the ground according to claim 1:
**characterised in that** the selectable distribution strategies (100) include at least one or more of the distribution strategies "uniform crop distribution" (106), "chopping quality" (107) and "energy efficiency" (108), wherein the distribution strategy "uniform crop distribution" (106) provides optimisation of the distribution of the crop flow (28) on the ground (26), the distribution strategy "chopping quality" (107) provides optimistion of chopping of the crop flow (28) in the chopping device (23) and the distribution strategy "energy efficiency" (108) provides optimisation of the energy demand for chopping and distributing the crop flow (28).

4. A combine harvester comprising a driver assist system controlling the distribution of a crop flow issuing from the combine harvester on the ground according to claim 3:
**characterised in that** the distribution strategy "uniform crop distribution" (106) takes account of one or more of the following partial strategies (101):
a) the mass issuing from the distribution device (127) of the proportionate crop flow (28) and the area proportion (128) of the ground (26) on which the sensed portion of the crop flow (28) is distributed are measured and the crop distribution on the area proportion (128) of the ground (26) is determined therefrom;
b) in dependence on the travel speed (vf) and the partial width utilisation (131) of the grain header (3) associated with the combine harvester (2) the area proportion (132) being processed is ascertained and the distribution of the issuing crop flow (28) is limited to said area proportion (132) of the ground (26);
c) ascertaining the crop throughput (133) and its transverse distribution (134) in the combine harvester (2) and altering the discharge direction and/or speed (135) of the crop flow (28) from the distribution device (127) in dependence on the ascertained throughput (133) and the ascertained transverse distribution (134);
d) detection of the travel speed (vf) in relation to the throughput-dependent travel speed change (Δvf) and a change in the discharge direction and/or speed (135) of the crop flow (28) in dependence on the detected travel speed change (Δvf);
e) detection of the wind parameters (136), wind strength, wind speed, wind direction and change in the discharge direction and/or speed (135) of the crop flow (28) in dependence on the detected wind parameters (136) ;
f) detection of the slope inclination and change in the discharge direction and/or speed (135) of the crop flow in dependence on the detected slope inclination;
g) detection of the straw moisture (137) and change in the discharge direction and/or speed (135) of the crop flow (28) in dependence on the detected straw moisture (137); and
h) increase in the distribution width (138) of the distribution device (127) with decreasing crop throughput (133).

5. A combine harvester comprising a driver assist system controlling the distribution of a crop flow issuing from the combine harvester on the ground according to claim 4:
**characterised in that** the distribution device (127) is in the form of a radial distributor (29) having deflector plates (67, 68) and the partial strategy g) increases the pendulum frequency of the deflector plates (67, 68) with increasing straw moisture (137).

6. A combine harvester comprising a driver assist system controlling the distribution of a crop flow issuing from the combine harvester on the ground according to claim 3:
**characterised in that** the distribution strategy "chopping quality" (107) includes the partial strategies (101) stepped inward pivotal movement of the counterpart blades (48) and/or the inward pivotal movement of the rubbing bar (50).

7. A combine harvester comprising a driver assist system controlling the distribution of a crop flow issuing from the combine harvester on the ground according to claim 3:
**characterised in that** the distribution strategy "energy efficiency" (108) takes account of one or more of the following partial strategy (101):
a) a reduction in the energy demand by stepped outward pivotal movement of the counterpart blades (48) and/or outward pivotal movement of the rubbing bar (50);
b) a rotting tendency of the crop flow (28) to be distributed on the ground (26) is ascertained and in dependence on the ascertained rotting tendency a required chopping length is set in the chopping device (23);
c) the chopping length is altered in dependence on the detected straw moisture (137) in such a way that a greater chopping length is set with decreasing straw moisture (137); and
d) the longer the chopping length is set the better the rotting tendency is.

8. A combine harvester comprising a driver assist system controlling the distribution of a crop flow issuing from the combine harvester on the ground according to claim 3:
**characterised in that** upon indirect detection of the result of the distribution strategy "energy efficiency" (108) one or more of the influencing parameters rotary speed of the chopping device (23), rotary speed of the main drive, crop throughput, material properties, transverse and longitudinal distribution in the straw chopper (22), rubbing bar (50), counterpart blade (48) and counterpart cutting member parameters (53) are taken into consideration.

9. A combine harvester comprising a driver assist system controlling the distribution of a crop flow issuing from the combine harvester on the ground according to one of the preceding claims:
**characterised in that** one or more of the partial strategies (101) implementing control of the distribution of the crop flow (28) issuing from the combine harvester (2) are stored in performance maps (119) in the computing unit (90).

## Revendications

1. Moissonneuse-batteuse (2) comprenant un système d'assistance à la conduite (98) qui régule l'épandage sur le sol d'un flux de produit sortant de la moissonneuse-batteuse et qui dispose d'une unité de calcul (90) et d'au moins une unité d'affichage (37), l'unité de calcul (90) traitant des informations (91) générées par des systèmes de capteurs (41) internes à la machine, des informations externes (92) et des informations (93) enregistrables dans l'unité de calcul (90), et le flux de produit (28) à épandre sur le sol (26) traversant dans la zone arrière de la moissonneuse-batteuse (2) un équipement de broyage et/ou d'épandage (23, 29, 42, 127), des stratégies d'épandage (100) étant enregistrées dans le système d'assistance à la conduite (98) pour réguler l'épandage du flux de produit (28) sortant de la moissonneuse-batteuse (2), **caractérisée en ce que**, lors de la sélection d'une stratégie d'épandage (100), une ou plusieurs stratégies partielles (101) associées à la stratégie d'épandage respective (100) sont traitées.

2. Moissonneuse-batteuse comprenant un système d'assistance à la conduite qui régule l'épandage sur le sol d'un flux de produit sortant de la moissonneuse-batteuse selon la revendication 1, **caractérisée en ce qu'**une stratégie d'épandage (100) et/ou une stratégie partielle (101) ou une combinaison de plusieurs stratégies d'épandage (100) et/ou de plusieurs stratégies partielles (101) est sélectionnée par l'utilisateur (39) de la moissonneuse-batteuse (2) ou proposée par le système d'assistance à la conduite (98).

3. Moissonneuse-batteuse comprenant un système d'assistance à la conduite qui régule l'épandage sur le sol d'un flux de produit sortant de la moissonneuse-batteuse selon la revendication 1, **caractérisée en ce que** les stratégies d'épandage sélectionnables (100) incluent au moins une ou plusieurs des stratégies d'épandage « distribution de produit régulière » (106), « qualité de hachage » (107) et « efficience énergétique » (108), la stratégie d'épandage « distribution de produit régulière » (106) induisant une optimisation de l'épandage du flux de produit (28) sur le sol (26), la stratégie d'épandage « qualité de hachage » (107) induisant une optimisation du broyage du flux de produit (28) dans l'équipement de broyage (23), et la stratégie d'épandage « efficience énergétique » (108) induisant une optimisation du besoin énergétique pour le broyage et l'épandage du flux de produit (28).

4. Moissonneuse-batteuse comprenant un système d'assistance à la conduite qui régule l'épandage sur le sol d'un flux de produit sortant de la moissonneuse-batteuse selon la revendication 3, **caractérisée en ce que** la stratégie d'épandage « distribution de produit régulière » (106) prend en compte une ou plusieurs des stratégies partielles suivantes (101) :
a) la masse du flux de produit proportionnel (28) sortant de l'équipement d'épandage (127) et la proportion surfacique (128) du sol (26) sur lequel la proportion captée du flux de produit (28) est épandue sont mesurées et l'épandage de produit sur la proportion surfacique (128) du sol (26) en est déduite ;
b) en fonction de la vitesse de marche (vf) et de l'exploitation de largeur partielle (131) du tablier de coupe de céréales (3) associé à la moissonneuse-batteuse (2), la proportion surfacique traitée (132) est déterminée et l'épandage du flux de produit sortant (28) sur cette proportion surfacique (132) du sol (26) est limitée ;
c) détermination du débit de produit récolté (133) et sa répartition transversale (134) dans la moissonneuse-batteuse (2) et modification de la direction et/ou de la vitesse d'éjection (135) du flux de produit (28) hors de l'équipement d'épandage (127) en fonction du débit déterminé (133) et de la répartition transversale déterminée (134) ;
d) détection de la vitesse de marche (vf) par rapport à la modification de vitesse de marche (Δvf) en fonction du débit et modification de la direction et/ou de la vitesse d'éjection (135) du flux de produit (28) en fonction de la modification de vitesse de marche détectée (Δvf) ;
e) détection des paramètres de vent (136) force du vent, vitesse du vent, sens du vent et modification de la direction et/ou de la vitesse d'éjection (135) du flux de produit (28) en fonction des paramètres de vent détectés (136) ;
f) détection du dévers et modification de la direction et/ou de la vitesse d'éjection (135) du flux de produit (28) en fonction du dévers détecté ;
g) détection de l'humidité de paille (137) et modification de la direction et/ou de la vitesse d'éjection (135) du flux de produit (28) en fonction de l'humidité de paille détectée (137) ;
h) augmentation de la largeur d'épandage (138) de l'équipement d'épandage (127) en cas de diminution du débit de produit récolté (133).

5. Moissonneuse-batteuse comprenant un système d'assistance à la conduite qui régule l'épandage sur le sol d'un flux de produit sortant de la moissonneuse-batteuse selon la revendication 4, **caractérisée en ce que** l'équipement d'épandage (127) est conformé en éparpilleur radial (29) comportant des tôles d'éparpillage (67, 68) et la stratégie partielle g) augmente la fréquence pendulaire des tôles d'éparpillage (67, 68) à mesure que l'humidité de paille (137) augmente.

6. Moissonneuse-batteuse comprenant un système d'assistance à la conduite qui régule l'épandage sur le sol d'un flux de produit sortant de la moissonneuse-batteuse selon la revendication 3, **caractérisée en ce que** la stratégie d'épandage « qualité de hachage » (107) inclut au moins les stratégies partielles (101) descente graduelle des contre-couteaux (48) et/ou la descente de la batte de friction (50).

7. Moissonneuse-batteuse comprenant un système d'assistance à la conduite qui régule l'épandage sur le sol d'un flux de produit sortant de la moissonneuse-batteuse selon la revendication 3, **caractérisée en ce que** la stratégie d'épandage « efficience énergétique » (108) prend en compte une ou plusieurs des stratégies partielles suivantes (101) :
a) une réduction du besoin énergétique est induite par une montée graduelle des contre-couteaux (48) et/ou par une montée de la batte de friction (50) ;
b) l'aptitude à la décomposition du flux de produit (28) à épandre sur le sol (26) est déterminée et, en fonction de l'aptitude à la décomposition déterminée, une longueur de broyage requise est réglée dans l'équipement de broyage (23) ;
c) la longueur de broyage est modifiée en fonction de l'humidité de paille détectée (137), de façon que la longueur de broyage réglée augmente à mesure que l'humidité de paille (137) diminue ;
d) la longueur de broyage réglée est d'autant plus grande que l'aptitude à la décomposition est bonne.

8. Moissonneuse-batteuse comprenant un système d'assistance à la conduite qui régule l'épandage sur le sol d'un flux de produit sortant de la moissonneuse-batteuse selon la revendication 3, **caractérisée en ce que**, en cas de détection indirecte du résultat de la stratégie d'épandage « efficience énergétique » (108), une ou plusieurs des grandeurs d'influence vitesse de rotation de l'équipement de broyage (23), vitesse de rotation entraînement principal, débit de produit récolté, propriétés matérielles, répartition transversale et longitudinale dans le hache-paille (22), paramètres de batte de friction (50), de contre-couteaux (48) et de contre-lames (53) sont prises en compte.

9. Moissonneuse-batteuse comprenant un système d'assistance à la conduite qui régule l'épandage sur le sol d'un flux de produit sortant de la moissonneuse-batteuse selon une des revendications précédentes, **caractérisée en ce qu'**une ou plusieurs des stratégies partielles (101) provoquant la régulation de l'épandage du flux de produit (28) sortant de la moissonneuse-batteuse (2) sont enregistrées en réseaux de courbes caractéristiques (119) dans l'unité de calcul (90).
